Europäisches Patentamt

European Patent Office

Office européen des brevets

(19)

(11) Publication number: **0 170 404 B1**

# EUROPEAN PATENT SPECIFICATION

(12)

(45) Date of publication of patent specification: **05.08.92**   (51) Int. Cl.⁵: **A23L  1/182**

(21) Application number: **85304572.2**

(22) Date of filing: **26.06.85**

(54) Process for preparing improved commodity rice.

(30) Priority: **29.06.84 US 625983**

(43) Date of publication of application:
**05.02.86 Bulletin  86/06**

(45) Publication of the grant of the patent:
**05.08.92 Bulletin  92/32**

(84) Designated Contracting States:
**DE FR GB SE**

(56) References cited:
**DE-C- 900 054**
**US-A- 4 338 344**
**US-A- 4 361 593**

(73) Proprietor: **GENERAL FOODS CORPORATION**
**250 North Street**
**White Plains, N.Y. 10625(US)**

(72) Inventor: **Desai, Manmohan Harrai**
**19, Stephen Drive**
**Hopewell Junction New York, 12533(US)**
Inventor: **Zobel, Frederick Abram**
**16, Cottage Terrace**
**Bedford Hills New York 10507(US)**
Inventor: **Burke, Joseph David**
**302, Mockingbird Avenue**
**Dover Delaware 19901(US)**

(74) Representative: **Baillie, Iain Cameron et al**
**c/o Ladas & Parry, Altheimer Eck 2**
**W-8000 München 2(DE)**

Rank Xerox (UK) Business Services

## Description

### FIELD OF THE INVENTION

A process for imparting parboiled rice-like characteristics to white commodity rice. More particular the present invention is concerned with subjecting milled commodity rice to high temperature low moisture processing thereby producing parboiled rice-like attributes.

### BACKGROUND OF THE INVENTION

There are many recipes and occasions for which rice is so highly preferred that it seems indispensable. The art has long endeavored to improve upon natural raw rice in terms of its cooking and eating qualities. Up to the present time, however, it has not been possible to produce a rapidly cooking rice which is non-starchy and yet has a texture comparable to parboiled rice.

Parboiled rice is typically prepared by soaking rough rice, paddy (unhulled rice, substantially as it comes from the field) in cold, warm or hot water for a substantial period of time, until the rice kernels have increased their moisture content, generally to at least above 20%; steaming the rice, generally at super-atmospheric pressure, to gelatinize the starch in the rice; and then drying the rice. The steaming partially opens the hulls and subsequent to steaming the kernels are dried and then milled.

Raw rice which is not parboiled, but is milled in the dry raw state, is typically cooked for 15 to 20 minutes. However, the rice resulting from this process is extremely starchy tasting. It is believed that water enters the individual starch granules within the rice kernels and causes them to swell, then burst releasing free molecular starch and yielding a very starchy, pasty feel in the mouth. The starch in the raw milled rice, as stated in the name, is essentially ungelatinized (raw). When the rice is ground and tested by amylograph analysis on a Brabender Viscometer in standard fashion, the ground rice will show a breakdown value of within the range of from 250 to 500 Brabender units. The amylograph breakdown value is the difference in viscosity, as recorded on the amylograph curve, between the peak viscosity and viscosity after a hold time, which is believed indicative of the amount of starch granules which have ruptured causing the reduction in viscosity. The free molecular starch released as the starch granules rupture causes starchiness, thus the breakdown value is directly proportional to the starchiness of the hydrated rice. This test is carried out by: grinding 50 grams of milled rice and blending with 450 ml. of distilled water; placing the sample in the Brabender Viscometer which is set at a starting temperature of 30°C.; and then heating and holding in the standard fashion (see Halick and Kelly, Cereal Chem. 36(1), 1959 and Ferrel and Pence, Cereal Chem. 41(1), 1964.

Parboiled rice, shows a great degree of improvement in its freedom from starchiness as evidenced by amylograph breakdown values of around 0 Brabender units or even a slightly negative value (indicating an increase in viscosity after hold time). In the case of a negative amylograph breakdown value not only are starch granules remaining unbroken, but they continue to swell. This advantage in organoleptic improvement is, however, offset to a degree by the increased cooking time required to fully rehydrate the dry parboiled rice to achieve a cooked product. Typically, parboiled rice will require from 20 to 25 minutes to reach full hydration.

A quicker-cooking parboiled rice on the order of about 15 minutes can be achieved by reducing the severity of the parboiling procedure, however, the ultimately cooked parboiled rice becomes starchy. Typically, the quicker cooking parboiled rice prepared in this manner shows very high amylograph breakdown values, being at least 150 Brabender units and typically being around 200 Brabender units and higher.

In an alternative to parboiled rice, a major advance was taught by Durrani in U.S. Patent No. 2,438,939. According to that process, a dry precooked quick-cooking rice was prepared which could be rehydrated for consumption by the consumer in as little as 10 minutes. The rice was precooked by subjecting a raw milled rice to heat and moisture to increase the moisture content to about 65 to 80% and to gelatinize the starch granules. Thereafter, the grains were dried to set them in their enlarged condition.

Despite the advantages of quick-cooking precooked rice, many consumers still prefer the eating consistency produced by parboiled rice. The precooked rice as prepared by these procedures, while being quick-cooking is very light and fluffy in texture. This precooked rice is not starchy as the free molecular starch is generally washed out in the precooking process. Raw, white milled rice is very starchy, but is also dense and relatively quick-cooking. Parboiled rice is dense and non-starchy, but takes a relatively long period of time to finally cook.

Typically, in parboiled rice the starch granules therein are at least 80% gelatinized and will show an absence of birefringent crosses as measured under polarized light. The percent of gelatinization of rice, as referred to herein, can be measured indirectly through percent alkali soluble starch according to the procedure set forth by Birch and Priestley in the publication Die Starke, 25, Jahrg.

1973. Nr. 3, pages 98-100.

In a paper by Bhattacharya and Rao in the Journal of Agricultural Food Chemistry, Vol. 14, No. 5, 1966, at pages 476-479, the effect of various conditions of soaking and steaming of paddy (rough rice) during parboiling are studied for their effect upon the cooking quality and the color of parboiled rice. It was concluded therein that the greater the severity of heat treatment during soaking and steaming, the lower the water uptake and the darker the color of the rice. While not supplying any data to the effect, the article states that it was observed that heaping of hot parboiled paddy in bulk prior to drying was similar in effect of continued steaming.

According to the disclosure of the Bhattacharya and Rao reference, where a soft cooking quality and light color is desired, quick cooling after parboiling may be the most important factor in industrial operations. Where the reverse of this is desired, this could be achieved by either prolonging the steaming step or heaping the parboiled paddy in bulk prior to drying. There is no discussion, however, of the relative importance of the various processing conditions on the preparation time of the dried rice products, or of their relative organoleptic qualities such as starchiness.

Also U.S. Patent No. 4,361,593 by Brooks et al., discloses an improved dry parboiled rice product and a process for preparing it, wherein rice can be rapidly rehydrated for consumption, but yet relatively non-starchy. This is achieved by modifying prior art parboiled rice procedures by less than completely gelatinizing the starch during steaming, and then tempering the rice under non-gelatinizing conditions for a period of time effective to reduce subsequent rupturing of the starch granules upon rehydration.

Current state-of-the-art rice parboiling processing methods require extensive processing time (up to 8 hours) and produce a product requiring 25 minutes final preparation time. Reduction of preparation time is commonly achieved by processing to high moisture levels (in excess of 60% moisture) to "instantize" the rice, resulting in extensive structural damage and loss of kernel integrity.

It is therefore an object of the present invention to prepare a white commodity rice with characteristics (texture/appearance) similar to parboiled rice.

Another object of the invention is to reduce the time required to prepare conventional commodity rice.

A further object of the invention is to reduce the moisture requirement, during processing, while retaining the structural integrity of the grain.

Still a further object of the invention is to reduce the processing time.

## SUMMARY OF THE INVENTION

The present invention is concerned with a process for preparing rice comprising: subjecting white commodity rice to steam at a steam pressure of between 103 and 689 kPa (15 and 100 psig); maintaining the steam pressure for between $\frac{1}{2}$ and 15 minutes; contacting the steamed rice with water for a time of between 5 seconds and 30 seconds; subjecting the rice that has been contacted with water to steam at a steam pressure of between 68.9 and 413 kPa (10 and 60 psig); maintaining the steam pressure for between $\frac{1}{2}$ and 15 minutes; and drying the rice to a final moisture of between 7 and 15%.

## DETAILED DESCRIPTION OF THE INVENTION

In accordance with the present invention, there is provided an improved dry, quick cooking, commodity rice product and a process for preparing same.

Before proceeding to a more detailed description of the invention, it is necessary to define some relevant terms.

By the term "commodity rice" is meant a white milled rice that is available commercially.

By the term "parboiled rice" is meant paddy grains which are subjected to soaking, pressure steaming followed by drying and milling. The heat gelatinizes the starch molecules and holds the grain together.

According to the present invention white commodity rice is placed into a steam pressure vessel. The vessel is sealed and steam is applied. The steam pressure generally ranges from 103 to 68g kPa (15 to 100 psig). It is preferred however, that the steam pressure ranges from 68.9 to 275.6 kPa (15 to 40 spig). This steam pressure corresponds to a temperature ranging from 121°C to 170°C (250 to 338°F) and preferably between 121°C and 142°C (250 and 288°F). After achieving the above pressure the rice is held for a time ranging from $\frac{1}{2}$ to 15 minutes and preferably from 1 to 2 minutes. It is also preferred in the present invention that the rice present in the vessel be agitated to achieve uniform treatment.

An alternative embodiment for carrying out the present invention is to subject white commodity rice in a pressure vessel to steam at a pressure ranging from 275.6 to 551.2 kPa (40 to 80 psig) with agitation. As the pressure increases, the holding time decreases i.e., at 275.6 kPa (40 psig) the holding is 7 minutes while at 551.2 kPa (80 psig) the holding time is only 1.5. It should be noted, however, that at a higher pressure the resulting rice has a darker color. The texture, however, is the same as the preferred two-step processes.

Subjecting the rice to the steam gelatinizes substantially all the starch granules on the surface of the rice kernels and yield a rice having a moisture level of less than 30%. This prevents the rice kernels from sticking together in subsequent steps and allow for greater water absorption during the soaking step.

Upon the attainment of the above processing conditions the vessel is vented to release the steam. The rice is then contacted with water by soaking same. During the soaking step the rice is contacted with water for a period of time effective to raise its moisture to 30 to 45% and preferably to 35%. The temperature of the water will typically be within the range of from 4.4°C to 100°C (40°F to 212°F) and preferably from 76.6°C to 100°C (170°F to 212°F). The soaking is preferably carried out under atmospheric pressure for a time ranging from 5 to 30 seconds and preferably from 10 to 20 seconds.

Because of the prior retorting step it is possible to increase the moisture content of the rice without having to soak same in water for a period in excess of 2 hours as in processing parboiled rice. The increased moisture can be accomplished in conjunction with the prior retort step by increasing the water temperature in the soaking step. Any increase in the soaking temperature will decrease the soaking time.

Optionally, in the present invention, water or other liquids may be introduced into the vessel while under pressure in order to achieve other desired structural or textural modifications.

Upon achieving the desired moisture content, the hydrated rice is once again subjected to pressurized conditions, wherein substantially all of the remaining starch granules in the rice are gelatinized. The steam pressure in the second pressurized heating is usually lower than the first because of the increased moisture of the rice kernel. This stem pressure ranges from 68.9 to 413.4 kPa (10 to 60 psig) and preferably from 68.9 to 206.7 kPa (10 to 30 psig) which should be sufficient to maintain the hydrated rice at a temperature of from 115.5°C to 153°C (240°F to 308°F) and preferably from 115.5°C to 134.4°C (240°F to 274°F), for a period of time ranging from 1/2 to 15 minutes and preferably from 4 to 8 minutes. It is also preferred that the rice be agitated while subjected to pressurized heating conditions.

The high moisture steaming step further reduces yellowing of the rice kernel. This also completes the gelatinization of all the starch molecules in the kernel at a moisture level below 50% without rupturing the whole kernel. At this point the desired textural characteristics of the rice are achieved.

Upon completion of the second steaming step the vessel is once again vented to release the steam and the rice removed and dried in a conventional manner. It is preferred, however, in the present invention that the rice be subjected to low temperature drying, that is, temperature ranging from 23.8°C to 121°C (75 to 250°F) and preferably from 23.8°C to 29.4°C (75°F to 85°F) for a period of time ranging from 15 minutes to 120 minutes and preferably for 60 minutes. The final moisture content of the dried rice should range from 7% to 15% and preferably from 7% to 13%.

The resulting commodity rice kernel has a translucent appearance, with a very smooth surface and a texture similar to commercially available parboiled rice. This commodity rice also cooks within 15 minutes and preferably within 12 minutes. Also, because of its improved textural integrity, the rice produced according to the present invention will retain its structure better than the typical white commodity rice during freezing, canning or other subsequent processing. In such cases, drying may not be necessary. This improved quality rice can also be used instead of parboiled rice.

The following example is presented to further illustrate the invention but it is to be understood that the invention is not limited to the details of these examples.

EXAMPLE I

One hundred grams of raw rice was placed in a slow rotating wire basket in the pressure vessel. The vessel was pressurizsed to 275.6 kPa (40 psig) and held for one minute at that pressure to completely gelatinize the surface starch. The pressure was then released and the basket removed and immersed in boiling water (100°C) (212°F) for 10 seconds, then well drained. The rice was then placed back in the pressure vessel and retorted with agitation/rotation at 241.1 kPa (35 psig) for 5 more minutes. Pressure was released, and the rice removed. The rice was fully gelatinized, the kernels were separated, and its volume was increased. It also had a moisture of 32%. The rice was bench top dried to a moisture of 12%. When the dried product was cooked in boiling water, its moisture content increased to 65.0% in 10 minutes and its texture and appearance was similar to cooked parboiled rice.

**Claims**

1. A process for preparing white commodity rice having a parboiled rice-like texture comprising the steps of:
   (a) a subjecting white commodity rice to steam at a steam pressure of between 103 and 689 kPa (15 and 100 psig).
   (b) maintaining the steam pressure for between ½ and 15 minutes;

(c) contacting the steamed rice with water for a time of between 5 seconds and 30 seconds;

(d) subjecting the rice of step (c) to steam at a steam pressure of between 68.9 and 413 kPa (10 and 60 psig);

(e) maintaining the steam pressure for between ½ and 15 minutes; and

(f) drying the rice to a final moisture of between 7 and 15%.

2. A process according to claim 1 step (a) wherein the rice is subjected to steam at a steam pressure of between 103 and 344 kPa (15 and 50 psig).

3. A process according to claim 1 wherein the step (b) steaming is maintained for a time of between 1 and 2 minutes.

4. A process according to claim 1 step (c) wherein the steamed rice is contacted with water for a period of time ranging from 10 to 20 seconds.

5. A process according to claim 4 wherein the water has a temperature ranging from 4.4°C to 100°C (40 to 212°F).

6. A process according to claim 5 wherein the water has a temperature ranging from 76.6°C to 100°C (170°F to 212°F).

7. A process according to claim 1 wherein the rice of step (c) is subjected to steam at a steam pressure of between 68.9 and 275.6 kPa (10 and 40 psig).

8. A process according to claim 1 or 7 wherein the rice is subjected to steam in a pressure vessel.

9. A process according to claim 8 wherein the rice within the pressure vessel is agitated.

10. A process according to claim 1 wherein the step (d) steaming is maintained for a period of time of between 4 and 8 minutes.

11. A process according to the claim 1 wherein the rice is dried to a final moisture ranging from between 7 and 13%.

12. A white commodity rice prepared according to any preceding claim said rice having parboiled rice-like characteristics and a cooking time of less than 15 minutes.

13. A product according to claim 12 wherein the cooking time ranges from 10 to 15 minutes.

## Revendications

1. Procédé pour la préparation de produits de riz blanc ayant une texture semblable à celle du riz précuit comprenant les étapes suivantes consistant à :

(a) soumettre un produit de riz blanc à la vapeur, à une pression de vapeur comprise entre 103 et 689 kPa (entre 15 et 100 psig) ;

(b) maintenir la pression de la vapeur pendant un laps de temps compris entre 1/2 et 15 minutes ;

(c) mettre en contact le riz cuit à la vapeur avec de l'eau pendant un laps de temps compris entre 5 secondes et 30 secondes ;

(d) soumettre le riz de l'étape (c) à la vapeur à une pression de vapeur comprise entre 68,9 et 413 kPa (entre 10 et 60 psig) ;

(e) maintenir la pression de vapeur pendant un laps de temps compris entre 1/2 et 15 minutes ; et

(f) sécher le riz jusqu'à obtention d'une teneur en eau finale comprise entre 7 et 15 %.

2. Procédé selon l'étape (a) de la revendication 1 où le riz est soumis à de la vapeur à une pression de vapeur comprise entre 103 et 344 kPa (entre 15 et 50 psig).

3. Procédé selon la revendication 1 où la cuisson à la vapeur de l'étape (b) est maintenue pendant un laps de temps compris entre 1 et 2 minutes.

4. Procédé selon l'étape (c) de la revendication 1 où le riz cuit à la vapeur est mis en contact avec de l'eau pendant un laps de temps compris entre 10 et 20 secondes.

5. Procédé selon la revendication 4 où l'eau est à une température comprise entre 4,4°C et 100°C (entre 40 et 212°F).

6. Procédé selon la revendication 5 où l'est est à une température comprise entre 7,6°C et 100°C (170°F et 212°F).

7. Procédé selon la revendication 1 où le riz de l'étape (c) est soumis à de la vapeur à une pression de vapeur comprise entre 68,9 et 275,6 kPa (10 et 40 psig).

8. Procédé selon la revendication 1 ou 7 où le riz est soumis à de la vapeur dans un récipient sous pression.

9. Procédé selon la revendication 8 où le riz à l'intérieur du récipient sous pression est agité.

10. Procédé selon la revendication 1 où la cuisson à la vapeur de l'étape (d) est maintenue pendant une période comprise entre 4 et 8 minutes.

11. Procédé selon la revendication 1 où le riz est séché jusqu'à obtention d'une teneur en eau finale comprise entre 7 et 13 %.

12. Produit de riz blanc préparé selon l'une quelconque des revendications antérieures, ledit riz ayant les caractéristiques du riz précuit et un temps de cuisson inférieur à 15 minutes.

13. Produit selon la revendication 12 où le temps de cuisson est compris entre 10 et 15 minutes.

**Patentansprüche**

1. Verfahren zum Herstellen von weißem Handelsreis, dessen Textur der von angekochtem Reis ähnelt, mit folgenden Schritten:
   (a) weißer Handelsreis wird mit Wasserdampf unter einem Dampfdruck zwischen 103 und 689 kPa behandelt;
   (b) der Dampdruck wird zwischen 1/2 und 15 min aufrechterhalten;
   (c) der gedämpfte Reis wird 5 bis 30 s mit Wasser in Berührung gebracht;
   (d) der im Schritt (c) erhaltene Reis wird mit Wasserdampf unter einem Dampfdruck zwischen 68,9 und 413 kPa behandelt;
   (e) der Dampdruck wird 1/2 bis 15 min aufrechterhalten; und
   (f) der Reis wird auf eine Endfeuchte zwischen 7 und 15% getrocknet.

2. Verfahren nach Anspruch 1, dadurch gekennzeichnet, daß im Schritt (a) der Reis mit Wasserdampf unter einem Dampfdruck zwischen 103 und 344 kPa behandelt wird.

3. Verfahren nach Anspruch 1, dadurch gekennzeichnet, daß das Dämpfen im Schritt (b) 1 bis 2 min lang durchgeführt wird.

4. Verfahren nach Anspruch 1, dadurch gekennzeichnet, daß der gedämpfte Reis im Schritt (c) 10 bis 20 s mit Wasser in Berührung gehalten wird.

5. Verfahren nach Anspruch 4, dadurch gekennzeichnet, daß das Wasser eine Temperatur zwischen 4,4 und 100°C hat.

6. Verfahren nach Anspruch 5, dadurch gekennzeichnet, daß das Wasser eine Temperatur zwischen 76,6 und 100°C hat.

7. Verfahren nach Anspruch 1, dadurch gekennzeichnet, daß der im Schritt (c) erhaltene Reis mit Wasserdampf unter einem Dampfdruck zwischen 68,9 und 275,6 kPa behandelt wird.

8. Verfahren nach Anspruch 1 oder 7, dadurch gekennzeichnet, daß der Reis in einem Druckgefäß mit Wasserdampf behandelt wird.

9. Verfahren nach Anspruch 8, dadurch gekennzeichnet, daß der Reis in dem Druckgefäß bewegt wird.

10. Verfahren nach Anspruch 1, dadurch gekennzeichnet, daß im Schritt (d) das Dämpfen 4 bis 8 min lang durchgeführt wird.

11. Verfahren nach Anspruch 1, dadurch gekennzeichnet, daß der Reis auf eine Endfeuchte zwischen 7 und 13% getrocknet wird.

12. Weißer Handelsreis, der nach einem der vorhergehenden Ansprüche hergestellt worden ist, ähnliche Eigenschaften hat wie angekochter Reis und eine Garzeit unter 15 min hat.

13. Produkt nach Anspruch 12, dadurch gekennzeichnet, daß die Garzeit 10 bis 15 min beträgt.